# EUROPEAN PATENT APPLICATION

(11) **EP 1 239 426 A2**
(43) Date of publication of application: **11.09.2002**
(21) Application number: 02004512.6
(22) Date of filing: 27.02.2002
(51) Int. Cl.: G07F 7/10

(54) **Security animation for display on portable electronic device**

(30) Priority: 02.03.2001 US 798254
(71) Applicant: Nokia Corporation, 02150 Espoo (FI)
(72) Inventor: Hagman, Emma, Nokia Corporation, 02150 Espoo (FI)
(74) Representative: Leson, Thomas Johannes Alois, Dipl.-Ing.

(57) **Abstract**

A graphical main menu animation for security applications on portable electronic devices uses a data structure indicative of a graphical icon animated to show an opening of a secure receptacle receiving data personal to a user of the device for secure storage therein. Transport of the data into the graphical icon and closure thereof is indicative of secure storage. For instance, one or more symbols private to the user can process in an ordered pattern towards the security icon where they are illustrated as entering and being secured therein by virtue of being hidden from view.

## Description

### BACKGROUND OF THE INVENITON

### 1. Field of the Invention

The present invention relates to user interface graphics for portable electronic devices and, more particularly, to an animation for display of secure storage of symbols personal to a user.

### 2. Description of Related Art

Entry and storage of personal user information is sometimes required in computer applications including portable electronic devices having a display and user input means such as a keyboard, microphone, or the like. Usually, the personal user information takes the form of a plurality of symbols relating to a password, a credit card account number, a bank account number, an encryption key, or similar information which the user does not wish to become public and which is to be stored on the device in a secure manner. This means that only the user or a third party granted permission by the user can gain access using a private password, key, or other device including physical devices such as cards.

Associated with the entry of such information into a computer or portable electronic device is a certain apprehension on the part of the user that the information personal to the user is perhaps not as secure or perhaps not actually secured in a manner which would give appropriate assurances to the user that such has been accomplished. It would be useful to provide a graphical user interface for the user to help him appreciate the process of secure storage of his personal information while it is being carried out and furthermore to give the user an indication at the conclusion of the process so that he feels assured of the security of such personal information.

### SUMMARY OF THE INVENTION

An object of the present invention is to make possible the presentation of an animation indicative of a secure storage process for use in a portable electronic device.

According to a first aspect of the invention, a method for use in a portable electronic device having a display and user input means comprises the steps of receiving a sequence of signals, each signal indicative of one of a plurality of symbols personal to a user and input in an ordered sequence by said user to said user input means, and displaying the plurality of signals on said display as part of a sequence of images together forming an animation indicative of a secure storage process.

According to a second aspect of the invention, a computer-readable medium encoded with a data structure for use in providing a graphical icon for display on a display of a portable device is characterized in that said data structure is encoded as digital data indicative of said graphical icon animated to show an opening thereof to receive data personal to a user of said device for secure storage therein, to show transport of said data into said graphical icon, and to show a closure of said graphical icon indicative of said secure storage of said data personal to said user.

According to a third aspect of the invention, a portable electronic device having a display and user input means comprises means for receiving a sequence of signals, each signal indicative of one of a plurality of symbols personal to a user and input in an ordered sequence by said user to said user input means, and means for displaying the plurality of signals on said display as part of a sequence of images together forming an animation indicative of a secure storage process.

According to the first, second and third aspects of the present invention, in addition to receiving and displaying the plurality of signals as an animation indicative of a secure storage process on the display, the present invention also includes secure storage of the plurality of signals in the device.

In still further accord with the first, second and third aspects of the present invention, each image of the plurality of images comprises an image of one or more symbols arranged in an ordered pattern corresponding to the ordered sequence of the plurality of symbols. The ordered pattern may comprise the symbols arranged in a row. These symbols in a row can be shown having a same size but alternately staggered.

Still further in accord with the first, second and third aspects of the present invention, the sequence of images together may form the animation as a procession of the symbols processing toward a security icon. The ordered pattern may comprise the symbols arranged in a row. The symbols arranged in a row may be shown having a same size but alternately staggered in position. The alternately staggered position of each symbol may be changed with that of an adjacent symbol during the processing in the row toward the security icon. The security icon may represent a purse, safe, strongbox, or the like.

These and other objects, features and advantages of the present invention will become more apparent in light of the following detailed description of a best mode embodiment thereof, as illustrated in the accompanying drawing.

### BRIEF DESCRIPTION OF THE DRAWING

Fig. 1 shows a portable electronic device, according to the present invention, with a graphical animation of a secure storage process.

Fig. 2 is broken down into Figs. 2(a)-(n) which together represent a sequence of images together forming an animation indicative of a secure storage process wherein each image is callable as a subroutine in an overall animation algorithm, each subroutine denoted by:
Fig. 2(a) qgn_menu_wallet1;
Fig. 2(b) qgn_menu_wallet2;
Fig. 2(c) qgn_menu_wallet3;
Fig. 2(d) qgn_menu_wallet4;
Fig. 2(e) qgn_menu_wallet5;
Fig. 2(f) qgn_menu_wallet6;
Fig. 2(g) qgn_menu_wallet7;
Fig. 2(h) qgn_menu_wallet8;
Fig. 2(l) qgn_menu_wallet9;

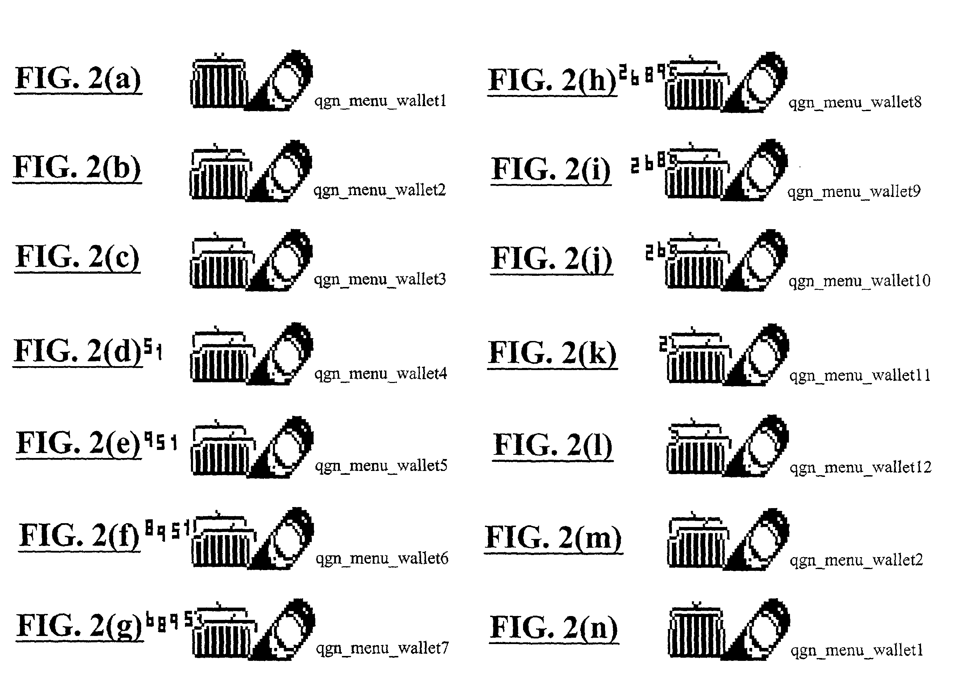

Fig. 2(j) qgn_menu_wallet10;
Fig. 2(k) qgn_menu_wallet11;
Fig. 2(I) qgn_menu_wallet12;
Fig. 2(m) qgn_menu_wallet13;
Fig. 2(n) qgn_menu_wallet14.

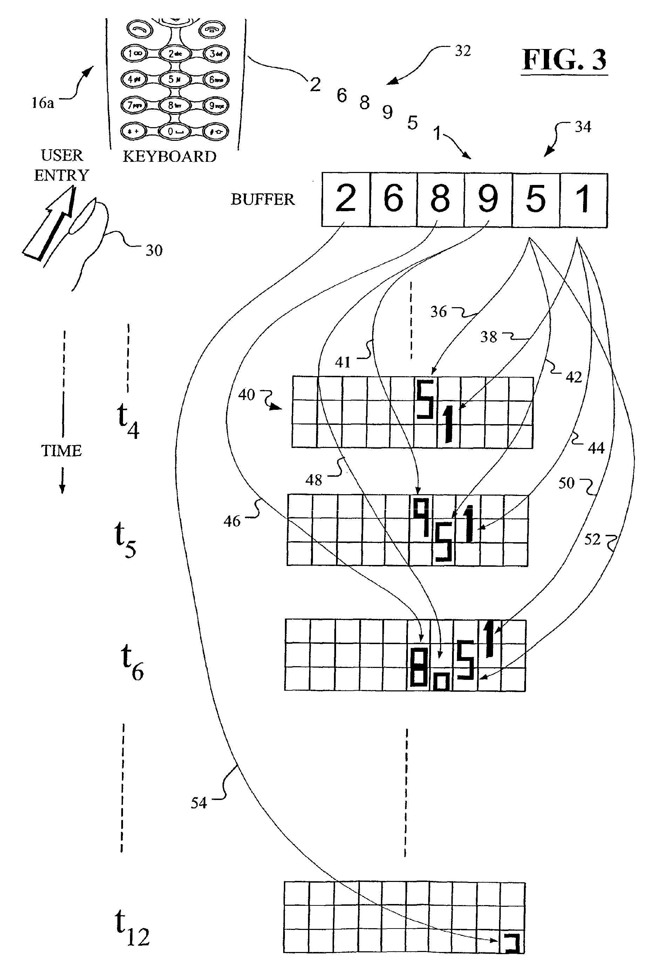

Fig. 3 is a stylized representation of the user entering personal information in the portable electronic device by way of a keyboard, the information being transferred to a buffer and from thence to the display for displaying the secure storage process animation of the present invention according to an embodiment thereof.

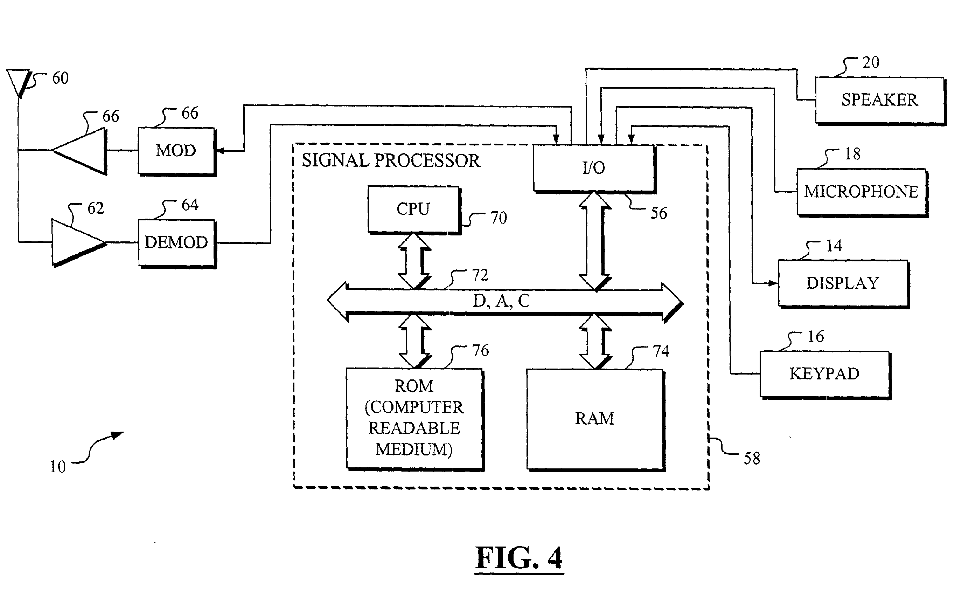

Fig. 4 shows a portable electronic device, according to the present invention.

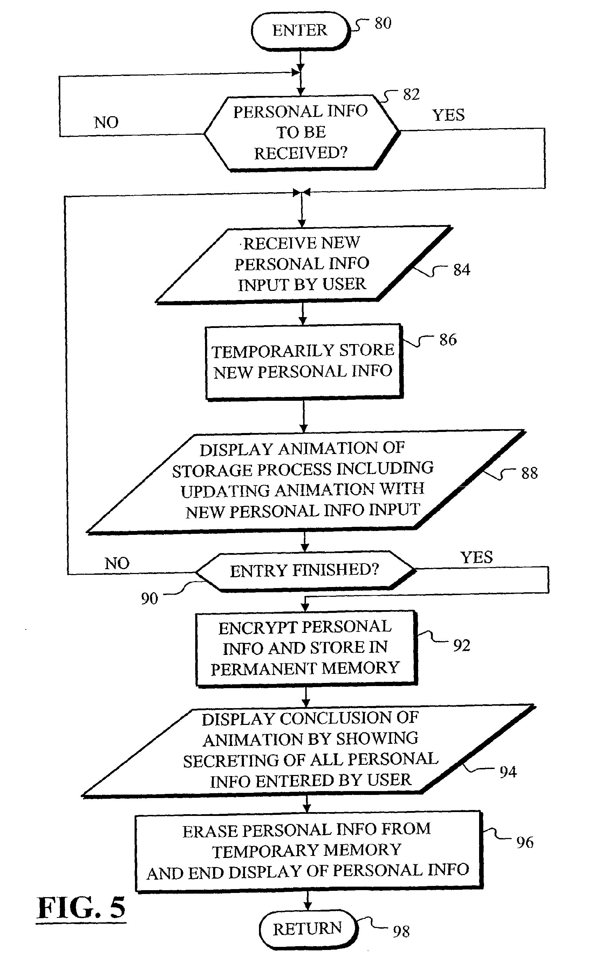

Fig. 5 shows a series of steps which may be carried out in the device of Fig. 4, according to an embodiment of the present invention.

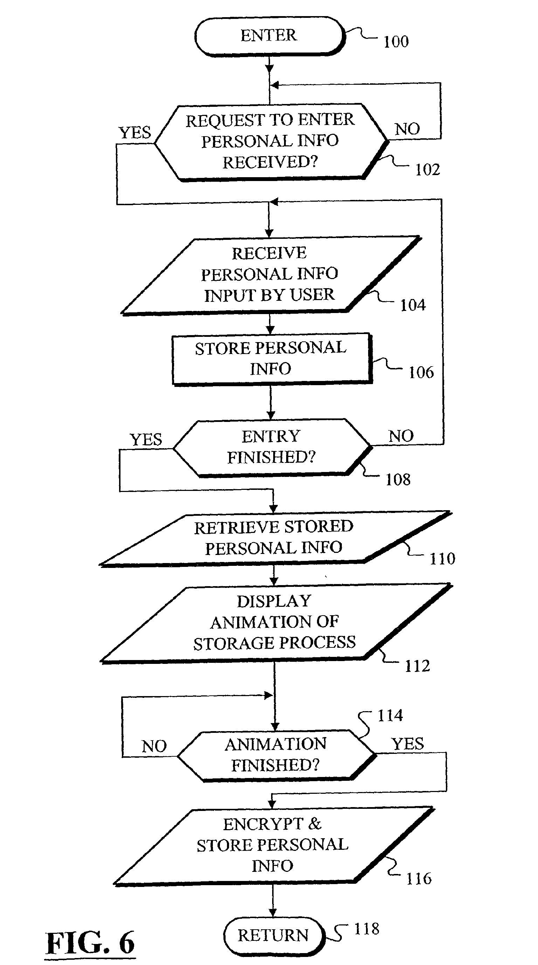

Fig. 6 shows another series of steps which may be carried out in the device of Fig. 4, according to another embodiment of the present invention.

### BEST MODE FOR CARRYING OUT THE INVENTION

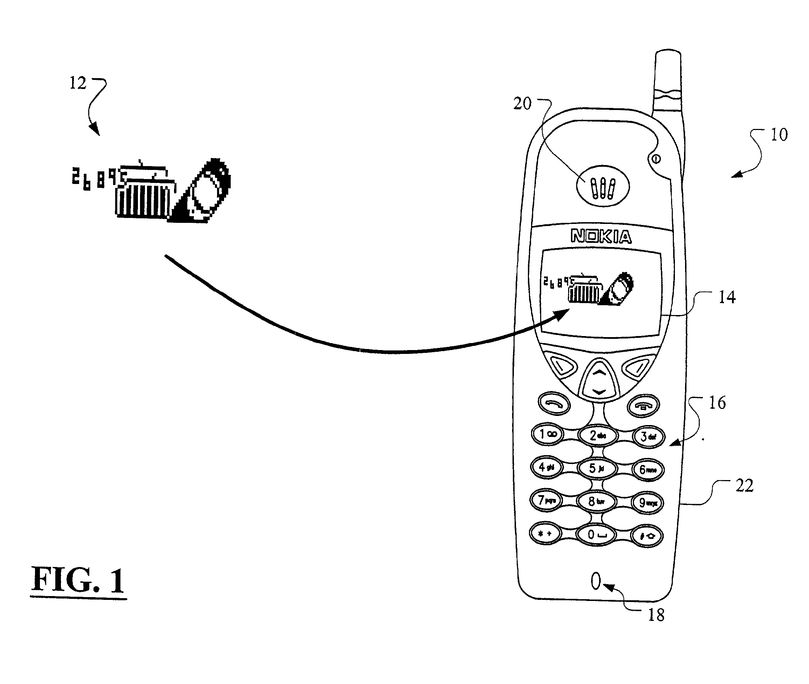

Fig. 1 shows a portable electronic device 10 in the form of a mobile station or wireless user terminal such as, but not limited to, a cellular radio telephone or personal communicator that is suitable for displaying an image 12 according to the present invention. It will be realized that there are other kinds of portable electronic devices besides that shown such as personal digital assistants (PDAs) and the invention is broadly applicable to all such devices including but not limited to PDAs. The image 12 represents one of a sequence of images which together form an animation indicative of a secure storage process. The image 12 shown in Fig. 1 therefore is part of such a sequence of images which are displayed one after another in time on the display 14. When such images are sequentially displayed, one after the other, it appears to the user that a series of illustrated symbols process from left to right into a secure storage device such as a purse which can be shown opening at the beginning of a process to allow the numbers to enter and which can close at the end of the animation to indicate the secure storage of the symbols. Altogether, the sequence of images together form the secure storage animation of the present invention.

The portable electronic device 10 of Fig. 1 includes a display 14, a keypad 16, and may also include a microphone 18 and a speaker 20. An antenna may be located behind the speaker at the back of the device 10 but is not shown in Fig. 1. The keypad 16 may be covered by a sliding cover 22 when the keypad is not in use.

Although an example of the secure storage process animation of the present invention will be shown with a particular image 12, it should be realized that the invention can take other forms of imagery such as the use of a lockbox, a safe, a wallet, or similar iconic representation of secure storage mechanisms, processes, or devices.

Each image of the sequence of images is prestored in a memory part of a signal processor to be described below in connection with Fig. 4. This memory may be permanent memory to temporary memory but in any event is a computer readable medium capable of storing an algorithm, bit map or both capable of being retrieved by such a signal processor or by a graphics controller for displaying the image 12 of Fig. 1 as well as a sequence of images such as those shown in Figs. 2(a)-2(n). Each of these images form a part of the sequence of images that together form the animation indicative of a secure storage process. The prestored images of Figs. 2(a)-2(n) begin with Figs. 2(a), (b), and (c) which together show a purse beginning in a closed representation in Fig. 2(a), in a partially opened representation in Fig. 2(b), and in a fully opened representation in Fig. 2(c). Each of the images are shown associated with a name, i.e., the image of Fig. 2(a) is associated with a name qgn_menu_wallet1. This is the name of a subroutine or program or data structure or the like that can be retrieved by the signal processor (to be described in connection with Fig. 4 below) for display on the display 14 at the proper time in its proper sequence. The first three images of Figs. 2(a), 2(b) and 2(c) do not have any display of user input symbols associated therewith. However, beginning with Fig. 2(d), the received sequence of signals from the user inputs begin to be displayed, as shown. These can be displayed immediately, i.e., contemporaneously with their entry or later, after the entire sequence has been entered. It will therefore be realized that the stored data structures of Figs. 2(d)-2(l) have to be augmented by user input signals indicative of symbols personal to the user. As mentioned, this can be done "on-the-fly" or delayed by signal processing techniques to be described below.

In order to give the user the feeling that his personal user information is being securely stored in the portable electronic device, the plurality of symbols input by the user are illustrated processing in a procession of such symbols from left to right into the secure device or purse while it is shown in an open position for receiving such symbols. The purse, wallet, safe or other security icon gives the user the feeling of security for his personal information. As can be seen in the sequence of images represented in Figs. 2(d)-(l), a sequence of numbers 1, 5, 9, 8, 6, 2 are shown processing from left to right into the purse where they eventually disappear, indicating secure storage therein.
This iconic representation of a sequence of images is of course accompanied by an actual secure storage process within the portable electronic device. Such a secure storage process can be accompanied for instance by an encryption process in which the user has a password, key, insertable card, or the like.

After the sequence of images of Figs. 2(d)-2(l) is concluded, the purse is shown closing in a further sequence as shown in Figs. 2(m) and 2(n).

As shown in the sequence of images of Figs. 2(a)-(n), each image of the plurality of images may comprise an image of one or more symbols arranged in an ordered pattern corresponding the ordered sequence of the plurality of symbols personal to the user and input in the same ordered sequence by the user to the user input means such as the keyboard of Fig. 1. The ordered pattern of symbols may be arranged in a row as shown. Such a row of symbols can be shown having a same size but alternately staggered such as in a vertically staggered manner as shown. The animation of such staggered symbols in a procession toward the purse or other security icon can be done in such a way that the symbols change places or are staggered into different positions as they process so as to undulate during the procession.

Fig. 3 shows such a staggering of graphical symbols in such an undulating procession. User entry of symbols personal to that user is shown by an index finger 30 entering symbols by depressing keys of a keyboard 16a. The plurality of symbols 32 personal to the user are shown being conveyed to a buffer memory 34 within the portable electronic device such as within the signal processor of Fig. 4 to be described below. These may be temporarily stored in a random access memory or other temporary computer readable medium. Instead of the general purpose signal processor to be described below in connection with Fig. 4, the buffer 34 may instead be part of or separate from a special purpose graphics controller designed for use within a particular portable electronic device. Such a graphics controller would also be intermediate to the keyboard and the display and would be responsive to a sequence of signals created by the user depressing the keys of the keyboard 16a for storage in a buffer such as the buffer 34 for temporary storage and retrieval for display such as shown in the lower portion of Fig. 3.

The lower portion of Fig. 3 is a stylized representation, in part, of the plurality of symbols personal to the user as stored in the buffer 34 being retrieved by such a graphics processor or general purpose signal processor for integration into the retrieved data structures of Figs. 2(d)-2(n) as explained above. Only four of the images are illustrated in Fig. 3, however. These correspond to the images of Figs. 2(d), 2(e), 2(f), and 2(n). They are illustrated on a time line representing display thereof at four different instances of time labeled t₄, t₅, t₆ and t₁₂. The subscripts correspond to the suffix appearing at the end of the name of the subroutine appearing in the corresponding figures 2(d), 2(e), 2(f) and 2(l).

At time t₄ corresponding to Fig. 2(d), the symbols 5 and 1 (personal to the user) are shown in the same way as shown in Fig. 2(d). The symbol 5 has been displayed by the signal processor after retrieval of the signal stored in the buffer 34 as signified by a line 36 symbolic of the retrieval of the stored signal and its conversion to a display symbol. Similarly, the signal representative of the symbol "1" is retrieved from the buffer and converted into a symbol display of that numeral as indicated by a line 38. The displayed symbol "5" is shown to the left and staggered vertically above the numeral "1" symbol in the same manner as shown in Fig. 2(d). These symbols are illustrated within a portion 40 of the total display of the portable electronic device. Only this small portion has been shown because of size limitations. The small portion is illustrated for convenience as being broken down into a 3X10 grid of squares, each square being made up of a plurality of pixels, for instance each being a 5X5 grouping of pixels for 25 pixels per square. In that case, the illustrated subpart of the display comprises a total of about 750 pixels with 250 pixels in each row.

The next image at time t₅ corresponds to that shown in Fig. 2(e). Due to execution of the subroutine qgn_menu_wallet5, signals are retrieved from the buffer 34 as indicated by lines 41, 42, 44 and displayed as symbols "9", "5" and "1" on the display 14 as shown in part on the portion 40 illustrated in Fig. 3 at time t₅. Similarly, at time t₆, the subroutine qgn_menu_ wallet6 is executed to bring up the display shown in Fig. 2(f). Appropriate signals are retrieved from the buffer 34, as shown by lines 46, 48, 50, 52. This continues on as indicated in Fig. 3 through times t₇, t₈, ..., t₁₂, as shown. A signal representative of the symbol "2" is retrieved from the buffer 34, as indicated by a line 54 at time t₁₂, corresponding to Fig. 2(l). After that, at time instance t₁₃ and t₁₄, the subroutines qgn_menu_wallet2 and qgn_menu_wallet1 are once again executed, except in reverse order, to show the closing of the purse, as indicated in Figs. 2(m) and (n).

Fig. 4 shows a schematic block diagram of the portable electronic device 10 of Fig. 1. The previously-mentioned display, keypad, microphone and speaker are shown to the right of Fig. 4. They are connected to an input/output (I/O) port 56 of a signal processor 58, which is inside of the device 10. The I/O device is also connected to the previously-mentioned antenna 60 through a receiver 62 and demodulator 64, as well as a modulator 66 and transmitter 68.

The signal processor 58 includes a central processing unit (CPU) 70 connected to a data, address and control bus 72, which is also connected to a random access memory (RAM) 74 and a read-only memory (ROM) 76, both of which are computer-readable media. They may be replaced by other kinds of computer-readable media, such as a miniature hard drive or other device capable of saving encoded digital data.

The digital data stored in the computer-readable medium 76 may include a computer program such as shown in Figs. 5, 6 or the like, for displaying an animated secure storage process according to the present invention, such as that shown in Figs. 2(a) - (n). Such a program could take the form shown in Fig. 5 or 6, but not necessarily. It can take other forms which would be equally valid for retrieving digital data representative of a secure storage process, according to the present invention.

In any event, referring now to Fig. 5, after entering in a step 80, a decision step 82 is executed to determine if personal info is to be received, such as an account of user entry 30, as shown in Fig. 3. If not, the step 82 is re-executed until such personal info is to be received. Once such info is to be received, a step 84 is executed to actually receive new personal info input by a user, as indicated by the user entry 30 of Fig. 3, for instance. After depressing the keys of the keyboard 16a, signals indicative of the personal information 32 are stored temporarily in a computer-readable medium, such as the buffer 34 of Fig. 3, as indicated in a step 86 in Fig. 5. At this point, at least the beginning images of the animation comprising the images of Figs. 2(a) - (c) can be commenced, as indicated in a step 88. Once personal info is temporarily stored in the step 86, the signals representative thereof can be retrieved and appropriate symbols introduced beginning with the image shown in Fig. 3(d), as explained previously. A decision is then made in a step 90 to determine if the entry of information is finished or not. If not, the steps 84, 86, 88 are repeated in order to present the sequence of images in an updated fashion, using the information entered for display "on-the-fly", so to speak. This approach to the display of the personal info input by the user is rather quick, so that the user receives instant feedback. The finishing of the entry of information can be indicated in some convenient manner by the user. Once the entry is finished, the personal info can be encrypted and stored in permanent memory, as indicated in a step 92. After that, the animation can be concluded on the display by showing the secreting of all of the personal info entered by the user, such as by the sequence of images illustrated in Figs. 2(l) - (n). The personal info is then erased from the temporary buffer 34, as indicated in a step 96, and the inventive display is ended and a return made in a step 98.

Instead of displaying the personal info entered by the user "on-the-fly", a different approach shown in Fig. 6 allows the user to enter all of the personal info before the animation commences.

After entering in a step 100 indicated at the top of Fig. 6, a decision step 102 is executed to determine if personal info is to be entered or not. If not, it is executed repeatedly until such is determined. Once it is determined that personal info is to be received on account of user entry thereof, a step 104 is executed to actually receive the personal info input by the user. This personal info is then stored in a step 106 and a determination is made in a step 108 as to whether entry is finished or not. If not, the steps 104, 106, 108 are repeated until entry is finished. In this way, all of the personal info is entered and stored before commencing the animation. Once entry is concluded, the stored personal info is retrieved, as indicated in a step 110, and displayed in a step 112, for instance, according to the animation shown in Figs. 2(a) - (n). Once the animation is finished, as determined in a step 114, the stored personal info is securely stored by encryption or some other secure storage method, as indicated in a step 116, followed by a return in a step 118.

Although the invention has been shown and described with respect to a best mode embodiment thereof, it should be understood by those skilled in the art that the foregoing and various other changes, omissions and additions in the form and detail thereof may be made therein without departing from the spirit and scope of the invention.

A graphical main menu animation for security applications on portable electronic devices uses a data structure indicative of a graphical icon animated to show an opening of a secure receptacle receiving data personal to a user of the device for secure storage therein. Transport of the data into the graphical icon and closure thereof is indicative of secure storage. For instance, one or more symbols private to the user can process in an ordered pattern towards the security icon where they are illustrated as entering and being secured therein by virtue of being hidden from view.

## Claims

**1.** Method for use in a portable electronic device having a display and user input means, comprising the steps of:
receiving a sequence of signals, each signal indicative of one of a plurality of symbols personal to a user and input in an ordered sequence by said user to said user input means, and
displaying the plurality of signals on said display as part of a sequence of images together forming an animation indicative of a secure storage process.

**2.** The method of claim 1, further comprising the step of securely storing said plurality of signals in said device.

**3.** The method of claim 1, wherein each image of said plurality of images comprises an image of one or more symbols arranged in an ordered pattern corresponding to the ordered sequence of said plurality of symbols.

**5.** The method of claim 3, further comprising the step of securely storing said plurality of signals in said device.

**4.** The method of claim 3, wherein said ordered pattern comprises said symbols arranged in a row.

**5.** The method of claim 4, wherein said symbols arranged in said row are shown having a same size but alternately staggered.

**6.** The method of claim 1, wherein said sequence of images together form said animation as a procession of said symbols processing toward a security icon.

**7.** The method of claim 6, wherein said ordered pattern comprises said symbols arranged in a row.

**8.** The method of claim 7, wherein said symbols arranged in said row are shown having a same size but alternately staggered in position.

**9.** The method of claim 8, further comprising the step of changing said alternately staggered position of each symbol with that of an adjacent symbol during said processing in said row toward said security icon.

**10.** The method of claim 6, wherein said security icon represents a purse.

**11.** A computer-readable medium encoded with a data structure for use in providing a graphical icon for display on a display of a portable device, **characterized in that** said data structure is encoded as digital data indicative of said graphical icon animated to show an opening thereof to receive data personal to a user of said device for secure storage therein, to show transport of said data into said graphical icon, and to show a closure of said graphical icon indicative of said secure storage of said data personal to said user.

**12.** A portable electronic device having a display and user input means, comprising:
means for receiving a sequence of signals, each signal indicative of one of a plurality of symbols personal to a user and input in an ordered sequence by said user to said user input means, and
means for displaying the plurality of signals on said display as part of a sequence of images together forming an animation indicative of a secure storage process

**13.** The portable device of claim 12, further comprising means for securely storing said plurality of signals.

**14.** The portable device of claim 12, wherein each image of said plurality of images comprises an image of one or more symbols arranged in an ordered pattern corresponding to the ordered sequence of said plurality of symbols.

**15.** The portable device of claim 14, wherein said ordered pattern comprises said symbols arranged in a row.

**16.** The portable device of claim 15, wherein said ordered pattern comprises said symbols arranged in a row.

**17.** The portable device of claim 12, wherein said sequence of images together form said animation as a procession of said symbols processing toward a security icon.

**18.** The portable device of claim 17, wherein said ordered pattern comprises said symbols arranged in a row.

**19.** The portable device of claim 18, wherein said symbols arranged in said row are shown having a same size but alternately staggered in position.

**20.** The portable device of claim 19, further comprising graphical control means for changing said alternately staggered position of each symbol with that of an adjacent symbol during said processing in said row toward said security icon.
